Europäisches Patentamt

European Patent Office

Office européen des brevets

(11) Publication number: **0 326 750**
**A2**

(12) # EUROPEAN PATENT APPLICATION

(21) Application number: 88311124.7

(22) Date of filing: 24.11.88

(51) Int. Cl.⁴: **H01S 3/101** , **H01S 3/03** ,
**H01S 3/081**

(30) Priority: 30.01.88 GB 8802078

(43) Date of publication of application:
09.08.89 Bulletin 89/32

(84) Designated Contracting States:
AT BE CH DE ES FR GR IT LI LU NL SE

(71) Applicant: EEV LIMITED
106 Waterhouse Lane
Chelmsford Essex CM1 2QU(GB)

(72) Inventor: Maitland, Arthur
15 The Canongate
St Andrews Fife Scotland KY16 8RU(GB)
Inventor: Clark, Graeme Lawrence
38 Trinity Road
Chelmsford Essex(GB)

(74) Representative: Cockayne, Gillian et al
The General Electric Company plc Central
Patent Dept. (Chelmsford Office) Marconi
Research Centre West Hanningfield Road
Great Baddow, Chelmsford Essex CM2
8HN(GB)

(54) **Lasers.**

(57) A laser includes mirrors 2, 3 and 4 which together define a laser cavity. The intermediate mirror 3 is inclined with respect to the vertical when the laser is operated in an orientation with the mirror 2 uppermost as illustrated. This ensures that any debris which would otherwise contaminate the mirror 3 and reduce its optical efficiency is deflected away from the laser cavity by the reflecting surface into the container 8. This process is aided by vibration means 10 and a heating coil 9 which ensures that molten material landing on the mirror does not solidify. In an alternative embodiment (not shown) the lowermost mirror is protected by a transparent member which acts as a deflecting surface.

Fig. 1

EP 0 326 750 A2

## LASERS

This invention relates to lasers, and more particularly to lasers which are capable of operating in a vertical orientation.

In its simplest form, a laser consists of two mirrors defining a laser cavity separated by an amplifying medium. The optical axis of such a laser is defined as the straight line followed by the laser beam within the cavity. The optical axis is normal to the mirrors and passes through the amplifying medium. Most lasers are operated with the optical axis substantially horizontal. In some applications, however, it is desirable that a laser be capable of operating in a substantially upright position for at least part of the time, that is, with the optical axis in a substantially vertical orientation. When this is the case, for certain types of laser, difficulties have been experienced because the lower mirror (or window) becomes obscured by debris which falls onto it from the tube walls and/or electrodes. These difficulties are exacerbated where the laser is a metal vapour type of laser, as molten metal within the tube tends to contaminate optical surfaces.

The present invention seeks to provide a laser in which the above difficulties are reduced or eliminated.

According to the invention there is provided a laser constructed and arranged such that, for an orientation of the laser where at least part of the layer cavity is substantially vertical, debris is deflected out of the vertical part of the laser cavity away from the laser beam path. The laser cavity of a laser is that region within which the laser beam is generated. By causing debris to be deflected from the vertical part of the laser cavity, the laser beam remains unobscured by material which might otherwise cover optical surfaces such as mirrors or windows within the laser. Advantageously, the debris is deflected by a deflecting surface.

In a preferred embodiment of the invention, the deflecting surface is a reflecting surface which defines part of the laser cavity. It is preferred that the reflecting surface is inclined with respect to the vertical when the said at least part of the laser cavity is substantially vertical. Thus debris may be deflected from the reflecting surface and does not accumulate on the reflecting surface, enabling the laser beam to be reflected along the desired optical path. Preferably, the part of the laser beam path between a laser cavity mirror and the reflecting surface is orthogonal to that between another laser cavity mirror and the reflecting surface. Thus, if the laser is operated in an orientation such that one part of the laser beam path is vertical, the other is substantially horizontal and the reflecting surface is arranged at approximately 45° with respect to the vertical.

It is preferred that the reflecting surface is flat, but it could be a concave mirror having a central aperture through which debris is arranged to fall. Debris may be collected by a container located beneath the aperture.

In another embodiment of the invention, the deflecting surface is a member of optically transmissive material. By "optically transmissive" it is meant that the material is capable of passing a large proportion of the radiation at the wavelength or wavelengths at which the laser operates. The type of material chosen depends on the operating conditions of the laser; one suitable material might be quartz. It is preferred that the member is flat, and advantageously, it may be arranged adjacent to a concave mirror. This arrangement allows a laser to be designed in which the laser beam path is extensive in one direction only, enabling a compact device to be achieved.

Advantageously, means may be included for providing heating of the deflecting surface in addition to any heating provided by a discharge within the laser tube. This enables control to be maintained over the temperature of the deflecting surface and reduces problems which may occur from, for example, condensation of metal vapour.

Also advantageously, means are included for applying vibration to the deflecting surface. This may be of assistance in preventing solid particles from sticking to the surface, especially if its angle of inclination to the vertical is not large.

Preferably, a container is included into which the debris may be directed. Use of a container is advantageous as debris tends to be retained within the container once it has been directed into it. It may be preferred that the container is removeably held in position as this can be useful during refurbishing of the laser.

The invention is particularly applicable to lasers in which the laser active medium is a metal vapour or a metallic compound vapour, as contamination by condensed material is a particular problem in these types of lasers.

Advantageously, a laser in accordance with the invention may include a laser oscillator section and a laser amplifier section, the output of the oscillator section being arranged to be input to the amplifier section.

Some ways in which the invention may be performed are now described by way of example with reference to the accompanying drawings, in which:

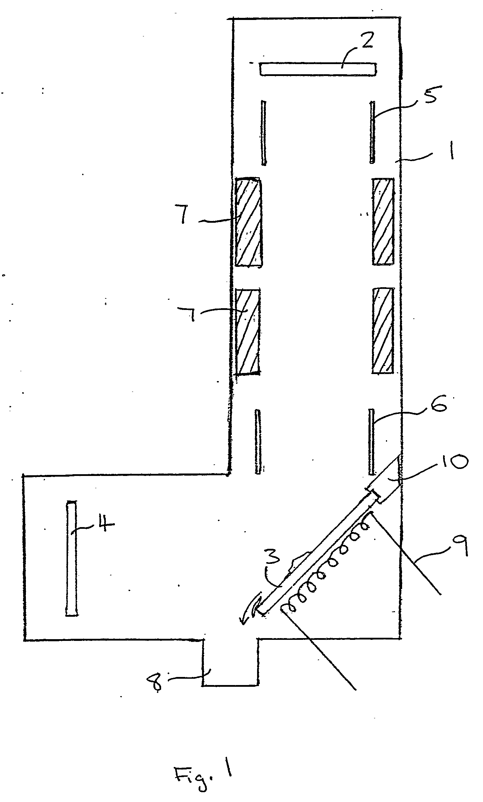

Figures 1, 2 and 3 are schematic diagrams of respective different lasers in accordance with the invention.

With reference to Figure 1, a copper vapour laser in accordance with the invention includes a discharge tube 1 within which are contained a transmissive mirror 2 and two diamond turned plane mirrors 3 and 4 which together define a laser cavity. The mirrors are positioned such that the part of the laser beam path between one end mirror 2 and the intermediate mirror 3 is orthogonal to the part of the laser beam path between the other end mirror 4 and the intermediate mirror 3. The upper end mirror 2 as illustrated is partially transmissive to allow laser radiation to leave the discharge tube 1. Electrodes 5 and 6 are also included within the tube 1, being located between the upper end mirror 2 and the intermediate mirror 3. The tube 1 also contains cylindrical segments 7 of sintered tungsten which, prior to assembly of the laser, are dipped in molten copper, the copper being retained within the segments 7 when it solidifies. A container 8 is located in the tube wall adjacent the intermediate plane mirror 3 and is extensive over its width.

The laser may be operated in an orientation as illustrated in Figure 1, where the end mirror 2 is at the top of the discharge tube 1 and the intermediate mirror 3 towards the bottom, such that part of the laser cavity is vertically positioned. During operation of the laser, copper evaporates from the segments 7 to form part of the laser amplifying medium. As the part of the laser cavity tube where the segments 7 are located, and where discharges occur, is vertical, molten copper tends to fall onto the mirror 3, contaminating its reflecting surface. Other debris within the tube, for example loose particles from the discharge tube walls, may also fall onto the mirror 3. In this orientation of the laser, the mirror 3 is inclined at approximately 45° to the vertical. Any debris falling on its reflecting surface is deflected away from the laser cavity by the inclined surface itself and falls into the container 8. This prevents the laser beam from being obscured by material on the reflecting surface of the mirror 3.

The laser also includes a heater coil 9 located adjacent to the mirror 3. This keeps the mirror 3 hot thereby preventing molten copper from solidifying on the reflecting surface. Also, vibration means 10 is located within the tube 1, and is arranged to agitate the mirror 3 so that particles which might otherwise stick to its surface tend to be freed.

As can be seen, the laser is suitable not only for use in the particular orientation shown, in which the laser cavity in the discharge region between electrodes 5 and 6 is substantially vertical, but also for other orientations. For example, the part of the laser cavity between the mirrors 3 and 4 could be positioned vertically. If the laser is operated in a position such that the mirrored surface of mirror 3 is horizontal, any molten copper and other contaminating debris within the tube 1 will fall to the side of the tube 1 before it reaches the mirror 3. It may be desirable to include a second container adjacent the mirror 3 so that if the mirror 4 is uppermost, debris falling on the mirror 3 would be collected by it. The container 8 may be arranged to be readily removeable from the laser, as this may be advantageous if the laser is refurbished. Although in the embodiment illustrated in Figure 1, the end mirrors 2 and 4 are planar, they could be concave and either of them, or both, could act as windows.

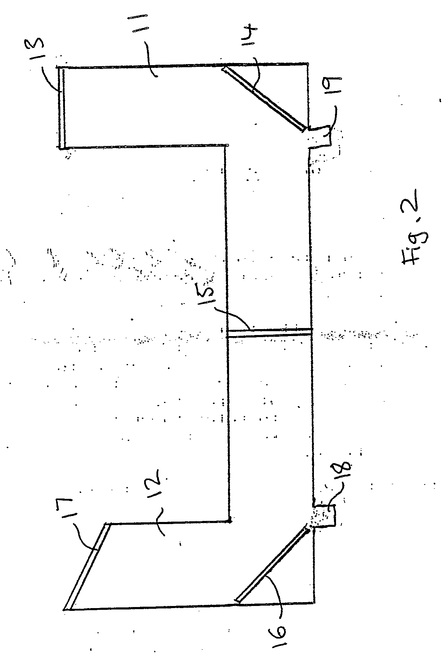

With reference to Figure 2, in another laser in accordance with the invention, the laser comprises two sections. To the right of the laser as illustrated, there is included a laser oscillator section 11 and, to the left, a laser amplifying section 12. The laser oscillating section 11 includes a hundred per cent reflective mirror 13, an inclined planar mirror 14 and a partially transmissive mirror 15. The output of the laser oscillator 11 is transmitted via the mirror 15 to the laser amplifier section 12 where it is amplified. The output of the amplifier section 12 is transmitted via an inclined mirror 15 and an angled output window 17. In this embodiment of the invention, two containers 18 and 19 are located adjacent the lower ends of the inclined mirrors 14 and 16 as shown, the window 17 and mirror 13 being the uppermost parts of the arrangement. In the orientation shown, windows 17 and mirror 13 remain free of any contamination and debris drawn downwards by gravity to inclined mirrors 14 and 16 is deflected into the containers 18 and 19 by the reflecting surfaces of the mirrors 14 and 16.

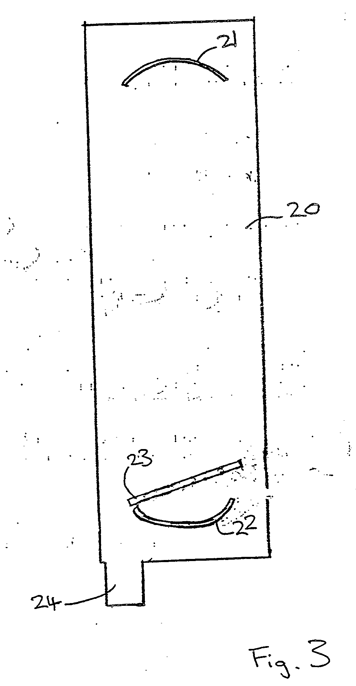

With reference to Figure 3, in another laser in accordance with the invention, a laser discharge tube 20 includes concave mirrors 21 and 22 which together define a laser cavity. A transparent member 23 is located above and adjacent to the mirror 21 which is arranged to be lowermost when the laser is operated in a vertical orientation as shown. The member 23 is substantially transparent to the generated laser radiation and is inclined with respect to the vertical when the laser is operated in the upright position shown. Thus, any debris falling upon the member 23 tends to slide into a container 24 and prevent the mirror 22 from being obscured.

An additional transparent member could be located at the other end of the laser so that it can be operated in an upside-down orientation if desired.

## Claims

1. A laser constructed and arranged such that, for an orientation of the laser where at least part of the laser cavity is substantially vertical, debris is deflected out of the vertical part of the laser cavity away from the laser beam path.

2. A laser as claimed in claim 1 wherein the debris is deflected by a deflecting surface (3,23).

3. A laser as claimed in claim 2 wherein the deflecting surface is a reflecting surface (3) which defines part of the laser cavity.

4. A laser as claimed in claim 3 wherein the reflecting surface (3) is inclined with respect to the vertical when the said at least part of the laser cavity is substantially vertical.

5. A laser as claimed in claim 3 or 4 wherein the reflecting surface (3) is substantially flat.

6. A laser as claimed in any of claims 3,4 or 5 wherein part of the laser beam path between a laser cavity mirror (4) and the reflecting surface (3) is substantially orthogonal to another part of the laser beam path between another cavity mirror (2) and the reflecting surface (3).

7. A laser as claimed in claim 2 wherein the deflecting surface is a member (23) of optically transmissive material.

8. A laser as claimed in claim 7 wherein the member is flat (23).

9. A laser as claimed in claim 7 or 8 wherein the member is arranged adjacent to a concave mirror (22).

10. A laser as claimed in any of the claims 2 to 9 and including means (9) arranged to provide heating to the deflecting surface in addition to any heating provided by a discharge within the laser.

11. A laser as claimed in any of claims 2 to 10 and including means (10) arranged to apply vibration to the deflecting surface.

12. A laser as claimed in any preceding claim and including a container (8) into which the debris is directed after deflection.

13. A laser as claimed in claim 12 wherein the container (8) is removeably held in position.

14. A laser as claimed in any preceding claim wherein the laser active medium is a metal vapour or a metallic compound, vapour.

15. A laser as claimed in any preceding claim and including a laser oscillator section (11) and a laser amplifier section (12), the output of the oscillator section being arranged to be input to the amplifier section.

Fig. 1

I/7518/EEV

Fig. 2

Fig. 3